**Europäisches Patentamt**

**European Patent Office**

**Office européen des brevets**

(19)

(11) Veröffentlichungsnummer : **0 377 146 B1**

(12) # EUROPÄISCHE PATENTSCHRIFT

(45) Veröffentlichungstag der Patentschrift :
**16.12.92 Patentblatt 92/51**

(51) Int. Cl.⁵ : **B01D 19/00**

(21) Anmeldenummer : **89123044.3**

(22) Anmeldetag : **13.12.89**

(54) **Vorrichtung zur Entgasung von Flüssigkeiten.**

(30) Priorität : **31.12.88 DE 3844460**

(43) Veröffentlichungstag der Anmeldung :
**11.07.90 Patentblatt 90/28**

(45) Bekanntmachung des Hinweises auf die
Patenterteilung :
**16.12.92 Patentblatt 92/51**

(84) Benannte Vertragsstaaten :
**AT BE CH DE ES FR GB GR IT LI LU NL SE**

(56) Entgegenhaltungen :
**BE-A- 657 805**
**DE-C- 243 376**
**FR-A- 2 329 597**
**LU-A- 45 211**

(73) Patentinhaber : **STORZ MEDICAL AG**
**Unterseestrasse 47**
**CH-8280 Kreuzlingen (CH)**

(72) Erfinder : **Hagelauer, Ulrich, Dr.**
**Moosfeldstrasse 6**
**W-8598 Bottighofen (DE)**

(74) Vertreter : **Münich, Wilhelm, Dr. et al**
**Kanzlei Münich, Steinmann, Schiller**
**Wilhelm-Mayr-Str. 11**
**W-8000 München 21 (DE)**

EP 0 377 146 B1

Jouve, 18, rue Saint-Denis, 75001 PARIS

## Beschreibung

Die Erfindung bezieht sich auf eine Vorrichtung zur Entgasung von Flüssigkeiten mit einem druckfesten Behälter, in dem die zu entgasende Flüssigkeit gespeichert ist, und in dem ein Unterdruck zur Durchführung des Entgasungsvorgangs erzeugbar ist.

Derartige Vorrichtungen haben eine breite Anwendung in vielen Gebieten der Technik und der Medizin. Insbesondere sind sie jedoch bei Lithotriptoren erforderlich:

Medizinische Lithotriptoren mit extrakorporal angeordneten Systemen zur Druckwellenerzeugung benötigen zur Übertragung ein flüssiges Medium, in der Regel Wasser oder bezüglich ihrer Schallübertragungseigenschaften wasserähnliche Flüssigkeiten. Verluste bei der Übertragung der Druckwellen können dadurch auftreten, daß die Flüssigkeit gelöste Gase oder in feinster Verteilung Gasblasen enthält, die die Kompressibilität vergrössern. Die erwünschten hohen und schnellen Druckanstiege werden hierdurch im Zug der Ausbreitung abgebaut und die Zertrümmerungswirkung des Lithotripters vermindert.

Weitere Probleme mit gelösten und feinst verteilten Gasen und Gasbläschen treten ein, wenn sich durch Auskeimung auf der Haut des Patienten oder auf den häufig verwendeten Koppelkissen oder -membranen makroskopische Luftblasen bilden. Sie führen, wiederum durch Erhöhung der Kompressibilität, jedoch auch durch Reflexion der Druckwelle, zu erheblichen Verlusten bei der Übertragung der Druckwelle.

Problematisch sind ebenfalls Hauteinblutungen, die sich bevorzugt an Stellen ausbilden, an denen Luftblasen anhaften. Weitere Probleme mit Gasblasen ergeben sich bei Anordnungen, bei denen Ultraschall-ortungsverfahren innerhalb des Druckwellen-Übertragungsbereichs zur Ortung der zu zertrümmernden Konkremente angeordnet sind. Auch hier tritt eine Total-Reflexion der Schallwellen auf, so daß eine ortung erschwert oder unmöglich gemacht wird.

Durch den Lithotripter MPL 9000 der Fa. Dornier ist eine Vorrichtung bekannt geworden, bei der zur Entgasung der Druck in der Flüssigkeit abgesenkt wird, so daß ein spontaner Gasaustritt einsetzt. Zur Abscheidung der Gasphase werden druckfeste Behälter verwendet, in deren oberem Teil sich das ausgeschiedene Gas sammelt und in bestimmten Zykluszeiten wieder entfernt wird. Dies kann dadurch geschehen, daß das abgeschiedene Gas gegen den im Behälter herrschenden Unterdruck abgesaugt wird. Eine weitere Möglichkeit ist die Anhebung des Drucks über den Umgebungsdruck, Flutung des Behälters und Entfernen des Gases über eine an der höchsten Stelle des Behälters gelegene Öffnung.

Bei den bekannten Vorrichtungen sind Steuer- und Regeleinrichtungen erforderlich, um die gewünschte zyklische Betriebsweise zu ermöglichen.

So erfordert das Absaugen des abgeschiedenen Gases gegen den herrschenden Unterdruck eine Vorrichtung zur Niveauregulierung, eine Pumpe zur Absaugung der Flüssigkeit, eine solche zur Gasabsaugung sowie eine Vorrichtung zur Drucküberwachung. Auch bei dem zweiten genannten Verfahren werden Regeleinrichtungen benötigt, um den Druck zyklisch anzuheben und abzusenken sowie um den Gasaustritt zu kontrollieren.

Beide genannten Verfahren lassen sich mit Sprühvorrichtungen oder Injektoren (Drosseln) kombinieren um die Entgasungswirkung zu fördern und einen quasi kontinuierlichen Betrieb, bzw. lange Zykluszeiten für die Entgasung und kurze Zeiten für Befüllung/Gaseliminierung zu erzielen.

Weitere bekannte Vorrichtungen nutzen die Abnahme der Gaslöslichkeit mit der Temperatur, d.h. die Entgasung wird über ein Erwärmen der Flüssigkeit erreicht. Diese Erwärmung läßt sich wiederum kombinieren mit Verfahren, bei denen Unterdruck eingesetzt wird.

Der Erfindung liegt die Aufgabe zugrunde, eine Vorrichtung zur Entgasung von Flüssigkeiten mit einem druckfesten Behälter, in dem die zu entgasende Flüssigkeit gespeichert ist, und in dem ein Unterdruck zur Durchführung des Entgasungsvorgangs erzeugbar ist, derart weiterzubilden, daß der Entgasungsvorgang mit einfachen Mitteln schnell und mit der insbesondere für medizinische Geräte erforderlichen Zuverlässigkeit durchgeführt werden kann.

Eine erfindungsgemäße Lösung dieser Aufgabe ist mit ihren Weiterbildungen in den Patentansprüchen gekennzeichnet.

Erfindungsgemäß umgibt den druckfesten Behälter ein Vorratsgefäß, in dem sich die zu entgasende Flüssigkeit befindet. Ein Ventil verbindet den Behälter und das Vorratsgefäß. Mit dem druckfesten Behälter ist eine Kolben/Zylinder-Einheit strömungsmäßig verbunden, deren Arbeitskolben aufgrund des im Behälter herrschenden Unterdrucks das Ventil öffnet bzw. schließt, so daß Flüssigkeit aus einem den druckfesten Behälter umgebenden Flüssigkeitsvorrat nachströmt und das abgeschiedene Gas durch das Ventil entweicht.

Die Erfindung zielt damit einerseits auf die Reduzierung von Steuer- und Regelkomponenten und andererseits auf eine Verkürzung der Zykluszeit für die Befüllung/Gaseliminierung ab. Hierbei wird eine Vorrichtung verwendet, bei welcher der im Behälter herrschende Unterdruck selbst zur Zyklussteuerung eingesetzt wird.

Weiterbildungen der Erfindung sind in den Unteransprüchen angegeben:

Gemäß Anspruch 2 ist die Ventilöffnung an der höchsten Stelle im Behälter angebracht. Ferner wirkt der Arbeitskolben über mechanische Mittel und insbesondere eine Kolbenstange auf das Ventil. Hierdurch ist gewährleistet, daß bei einfachstem Aufbau eine vollständige Entgasung erfolgt, d.h. daß sich keine "Gasblasen-Nester" bilden können.

Die im Anspruch 3 gekennzeichnete Weiterbildung, gemäß der die am Arbeitskolben wirksame Druckdifferenz über ein weiteres Ventil veränderbar ist, erlaubt ein genaues Einstellen der "Kennlinie" der erfindungsgemäßen Vorrichtung.

Hierzu dient auch die im Anspruch 4 angegebene Ausgestaltung, gemäß der die hydraulischen Querschnitte von Arbeitskolben und Schließventil unterschiedlich sind.

Auch die im Anspruch 5 angegebene Weiterbildung, bei der die mechanischen Mittel zur Kraftübertragung zwischen Arbeitskolben und Schließventil ein Kraft/Weg-Übersetzung beeinhalten, dient diesem Zweck.

Im Anspruch 6 ist gekennzeichnet, daß der Arbeitskolben als Dämpfungskolben wirkt, dessen Dämpfung über eine Drossel veränderbar ist, so daß sich eine Zeitverzögerung zwischen Druckausgleich und Schließen des Schließventils ergibt.

Alternativ kann dies auch dadurch erreicht werden, daß eine Steuereinheit und insbesondere eine elektronische Steuereinheit eine Zeitverzögerung zwischen Druckausgleich und Schließen des Schließventils bewirkt (Anspruch 8).

In jedem Falle ist es besonders vorteilhaft, wenn die Entgasung zusätzlich durch Rühren der Flüssigkeit, Injektion der Flüssigkeit über Drosseln, Venturirohre, Erwärmung der Flüssigkeit etc. förderbar ist.

Die erfindungsgemäße Vorrichtung eignet sich aufgrund ihrer Betriebssicherheit und ihrer geringen Herstellkosten besonders für die Verwendung in medizinischen Lithotriptoren.

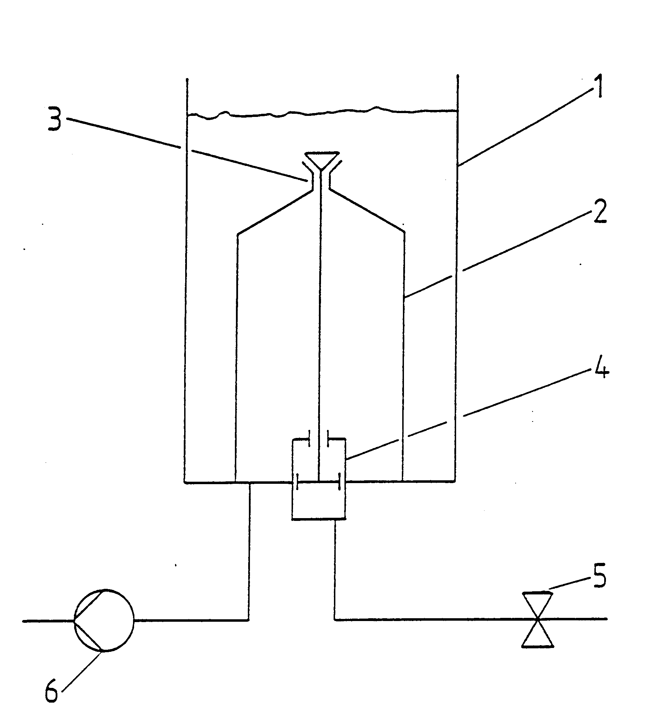

Die Erfindung wird nachstehend anhand eines Ausführungsbeispiels unter Bezugnahme auf die Zeichnung näher beschrieben, deren einzige Figur einen schematischen Querschnitt durch eine erfindungsgemäße Vorrichtung zeigt.

Die erfindungsgemäße Vorrichtung besteht aus einem Flüssigkeitsbehälter (1), einem Exsikkationsgefäß (2), einem Ventil zur Gaseliminierung (3), einem damit verbundenen Arbeitskolben (4), einem Ventil (5) sowie einer Pumpe (6).

Zu Beginn des Entgasungszyklus ist der Exsikkator (2) mit Flüssigkeit gefüllt und das Ventil (5) geschlossen. Beim Betrieb der Pumpe (6) wird der zur Entgasung erforderliche Unterdruck aufgebaut und das Ventil (3) schließt selbsttätig aufgrund der entstehendenen Druckdifferenz. Infolge der geringen Komprimierbarkeit von Flüssigkeiten erfolgt der Druckabfall nach Schließen des Ventils (3) sehr rasch, so daß ein spontaner Gasaustritt stattfindet. Die Pumpe fördert nun die entgaste Flüssigkeit aus dem Exsikkator innerhalb einer festgelegten Zeitspanne. Nach Ablauf dieser Zeit wird das Ventil (5) kurz geöffnet. Aufgrund der gegenüber der Fläche des Ventils (3) grösseren Fläche des Arbeitskolbens (4) bewegt sich letzterer nach oben und öffnet das Ventile (3). Die im Behälter (1) vorhandene Flüssigkeit strömt rasch in den Exsikkator nach, der Druck im Behälter steigt an und der Arbeitskolben sinkt nach unten. In diesem Zeitpunkt ist das Ventil (5) bereits geschlossen, die Absinkgeschwindigkeit (und damit die Zeitverzögerung zwischen Druckausgleich und Schließen von Ventile (3)) des Kolbens läßt sich über eine Drosselbohrung einstellen. Sie wird so bemessen, daß die im oberen Teil des Exiskkators befindliche Luft über das noch geöffnete Ventil (3) entweichen kann. Ist der Arbeitskolben (4) weit genug abgesunken, so schließt das Ventil (3) und der Entgasungszyklus beginnt neu.

Vorstehend ist die Erfindung anhand eines Ausführungsbeispiels ohne Beschränkung des allgemeinen Erfindungsgedankens beschrieben worden, innerhalb dessen selbstverständlich die verschiedensten Modifikationen möglich sind. Beispielsweise ist es möglich, mechanische und elektronische Dämpfungsmittel vorzusehen, die eine Zeitverzögerung zwischen Druckausgleich und Schließen des Schließventils ergibt.

## Patentansprüche

1. Vorrichtung zur Entgasung von Flüssigkeiten mit einem druckfesten Behälter, in dem die zu entgasende Flüssigkeit gespeichert ist, und in dem ein Unterdruck zur Durchführung des Entgasungsvorgangs erzeugbar ist,
gekennzeichnet durch folgende Merkmale:
   - den druckfesten Behälter (2) umgibt ein Vorratsgefäß (1), in dem sich die zu entgasende Flüssigkeit befindet,
   - ein Ventil (3) verbindet den Behälter (2) und das Vorratsgefäß (1),
   - mit dem druckfesten Behälter ist eine Kolben/Zylinder-Einheit strömungsmäßig verbunden, deren Arbeitskolben aufgrund des im Behälter herrschenden Unterdrucks das Ventil öffnet bzw. schließt, so daß Flüssigkeit aus einem den druckfesten Behälter umgebenden Flüssigkeitsvorrat nachströmt und das abgeschiedene Gas durch das Ventil (3) entweicht.

2. Vorrichtung nach Anspruch 1,
dadurch gekennzeichnet, daß die Ventilöffnung an der höchsten Stelle im Behälter angebracht ist, und daß der Arbeitskolben über mechanische Mittel und insbesondere eine Kolbenstange auf das Ventil wirkt.

3. Vorrichtung nach Anspruch 1 oder 2,
dadurch gekennzeichnet, daß die am Arbeitskolben wirksame Druckdifferenz über ein weiteres Ventil veränderbar ist.

4. Vorrichtung nach einem der Ansprüche 1 bis 3, dadurch **gekennzeichnet**, daß die hydraulischen Querschnitte von Arbeitskolben und Schließventil unterschiedlich sind.

5. Vorrichtung nach einem der Ansprüche 2 bis 4, dadurch **gekennzeichnet,** daß die mechanischen Mittel zur Kraftübertragung zwischen Arbeitskolben und Schließventil ein Kraft/Weg-Übersetzung beeinhalten.

6. Vorrichtung nach einem der Ansprüche 1 bis 5, dadurch **gekennzeichnet,** daß der Arbeitskolben als Dämpfungskolben wirkt, dessen Dämpfung über eine Drossel veränderbar ist, so daß sich eine Zeitverzögerung zwischen Druckausgleich und Schließen des Schließventils ergibt.

7. Vorrichtung nach einem der Ansprüche 1 bis 5, dadurch **gekennezeichnet,** daß eine Steuereinheit und insbesondere eine elektronische Steuereinheit eine Zeitverzögerung zwischen Druckausgleich und Schließen des Schließventils bewirkt.

8. Vorrichtung nach einem der Ansprüche 1 bis 7, dadurch **gekennzeichnet,** daß die Entgasung zusätzlich durch Rühren der Flüssigkeit, Injektion der Flüssigkeit über Drosseln, Venturirohre, Erwärmung der Flüssigkeit etc. förderbar ist.

9. Verwendung einer Vorrichtung nach einem der Ansprüche 1 bis 8 für medizinische Lithotriptoren.

**Claims**

1. Device for degassing liquids, comprising a pressure-resistant container for storing the liquid to be a degassed, and wherein a vacuum can be generated for realizing the degassing operation, **characterized by** the following features:
   - the pressure-resistant container (2) is surrounded by a reservoir (1) which contains the liquid to be degassed,
   - a valve (3) connects said container (2) and said reservoir (1),
   - a piston/cylinder means is in fluid communication with said pressure-resistant container and has an operating piston which opens and closes said valve in response to the vacuum prevailing in said container so that liquid may continue flowing out of said liquid reservoir surrounding said pressure-resistant container and the separated gas escapes through said valve (3).

2. Device according to Claim 1,

**characterized** in that the valve port is located at the highest location in said container, and that said operating piston acts upon said valve through mechanical means and particularly a piston rod.

3. Device according to Claim 1 or 2, **characterized** in that the pressure difference acting upon said piston can be throught another valve.

4. Device according to any of Claims 1 to 3, **characterized** in that the hydraulic cross-sections of said operating piston and said closing valve are different.

5. Device according to any of Claims 2 to 4, **characterized** in that said mechanical means for power transmission between said operating piston and said closing valve include a power/travel transmission system.

6. Device according to any of Claims 1 to 5, **characterized** in that said operating piston produces the effect of a damping piston whose damping decrement may be varied throught a throttle valve so as to produce a time delay between the equalization of pressure and the closing of said closing valve.

7. Device according to any of Claims 1 to 5, **characterized** in that a control means and particularly an electronic controller produces a time delay between the equalization of pressure and the closing of said closing valve.

8. Device according to any of Claims 1 to 7, **characterized** in that the degassing operation may be additionally enhanced by stirring the liquid, by injection of the liquid through throttle valves, by Venturi tubes, by heating the liquid, etc.

9. Application of a device according to any of Claims 1 to 8 for medical lithotriptors.

**Revendications**

1. Dispositif pour le dégazage de liquides, comprenant un collecteur résistant à la pression pour stocker le liquide à dégazer, où on peut établir une dépression pour effectuer le processus de dégazage, **caractérisé** par les caractéristiques suivantes:
   - le collecteur (2) est entouré par un réservoir (1) qui contient le liquide à dégazer,
   - une vanne (3) relie ledit collecteur (2) audit réservoir (1),

- une unité piston/cylindre est reliée au collecteur résistant à la pression sur le plan fluidique, dont le piston moteur ouvre ou ferme la vanne en réponse à la dépression qui règne à l'intérieur du collecteur, de façon que de liquide continue à couler d'un réservoir entourant le collecteur résistant à la pression et que le gaz séparé s'échappe par la vanne.

2. Dispositif selon la revendication 1, **caractérisé** en ce que l'ouverture de la vanne est disposée au point le plus haut dans le collecteur, et en ce que le piston moteur opère sur la vanne par des moyens mécaniques, en particulier une tige de piston, opère sur la vanne.

3. Dispositif selon la revendication 1 ou 2, **caractérisé** en ce que la différence de pression effective au piston moteur se peut varier au moyen d'une autre vanne.

4. Dispositif selon une quelconque des revendications 1 à 3, **caractérisé** en ce que les sections transversales hydrauliques du piston moteur et de la vanne de fermeture sont différentes.

5. Dispositif selon une quelconque des revendications 2 à 4, **caractérisé** en ce que les moyens mécaniques pour la transmission de force entre le piston moteur et la vanne de fermeture comprennent une translation force/marche.

6. Dispositif selon une quelconque des revendications 1 à 5, **caractérisé** en ce que le piston moteur produit l'effet d'un piston amortisseur dont l'amortissement est variable par un étrangleur de façon qu'il en résulte un retard de temps entre la compensation de pression et la fermeture de la vanne.

7. Dispositif selon une quelconque des revendications 1 à 5, **caractérisé** en ce que qu'une unité de commande, en particulier un organe de commande électronique, donne lieu à un retard de temps entre la compensation de pression et la fermeture de la vanne

8. Dispositif selon une quelconque des revendications 1 à 7, **caractérisé** en ce qu'on peut prévoir des moyens pour améliorer encore le dégazage par agitation du liquide, par injection du liquide au moyen d'étrangleurs, par des tubes de Venturi, en le chauffant, etc.

9. Emploi d'un dispositif selon une quelconque des revendications 1 à 8 pour des lithotripteurs médicaux.